# EUROPEAN PATENT APPLICATION

(11) **EP 3 188 347 A1**
(43) Date of publication of application: **05.07.2017**
(21) Application number: 16207595.6
(22) Date of filing: 30.12.2016
(51) Int. Cl.: H02K 3/52, H02K 1/14

(54) **STATOR FOR AN ELECTRICAL MOTOR AND PROCESS OF MANUFACTURING THE SAME**

(30) Priority: 04.01.2016 BR 102016000054
(71) Applicant: Whirlpool S.A., 04578-000 São Paulo - SP (BR)
(72) Inventor: PACHECO, Anderson Ricardo, 89218-005 Joinville (BR)
(74) Representative: Soldatini, Andrea

(57) **Abstract**

The present invention describes a device for electrical engine stator and a process of manufacturing a blade plate for coil. Specifically, the present invention comprises a first set of blades (14.a) comprising reduced sizes related to a second set of blades (14.b), where the second set of blades (14.b) is associated to external portions (16) of first set of blades (14.a), in a way to form an element, as a core for coils, with a central region of reduced size related to the edges. The present invention is on the field of manufacturing process of engines, electrical engineer and electrical engines.

## Description

### Field of the Invention

The present invention relates to a device for engine stator, an electrical engine and a coil insulation procedure engine stator. The present invention lies in the engine manufacturing process fields, electrical engineer and electrical engines.

### Background of the Invention

Conventionally, electrical engines comprise a fixed part called stator and a moving part called rotor, where the stator is composed of a set of coils that has its conventional manufacturing process consisting in dimensioning a reel to hold the winding of an electrical conductor wire. The reel is formed by joining two insulating plates, which may have cross-sectional circular or square, so that an electrical conductor wire is wound axially to the axis of the insulating plates so that the insulating plates prevent the winding wire to contact stator electrical steel. Further, the thread gauge is dimensioned to withstand the necessary load current which is subjected, and the number of turns that the same features.

The coil wound on a reel is fitted with the central part of a set of electrical steel strip, whose main function form the core of the set. The conventional electrical steel sheets are formed by the association of the various units, as well as metal sheets being superposed to provide a sufficient size to fit in the center of the coil, which usually have a "T" shape, the coil is arranged the central arm of Blades.

Due to the conditions imposed by manufacturing the elements that make up the coil, for example, insulation means between the conductive parts of electrical current, the blades are necessarily formed by plates which have all the same dimensions. This fact provides a very high expense in the amount of material to make the blades, and a high manufacturing cost.

### Summary of the Invention

Thus, the present invention aims to solve the listed problems in the prior art from an electrical engine stator device, wherein the electrical conductor wire coil is insulated from the metal parts composing the engine structure through insulation plates (11) and (12) separated by an insulating medium by air (13) and comprises a first set of blade plate (14.a) and a second set of blade plate (14 .b) having different dimensions from one another, wherein the wire coil conductor (15) is arranged.

In a first object the present invention provides a device for electrical engine stator comprising:
a. electrical conductor wire coil (15);
B. first insulation plate (11);
w second insulation plate (12);
d. first set of blades (14.a); and
e. second set of blades (14.b)
in which,
- a first insulation plate (11) is disposed in a first region (11.a) and the second insulation plate (12) is disposed in a second region (12.a);
- a first insulation plate (11) and the second insulation plate (12) are intermediated by means of air insulation (13).
- The first set of blades (14.a) has dimensions less than the second set of blades (14.b);

In a second object, the present invention provides a blade manufacturing process for coil being defined by the steps of:
a. mounting a first set of blades (14.a);
b. mounting a second set of blades (14.b);
c. associating a second set of blades (14.b) at the upper end (16.a) of the first set of blades (14.a);
d. associating a second set of blades (14.b) at the lower end (16.b) of the first set of blades (14.a); and
e. inserting the blade plate combination (14) in the center of a coil (15);
in which,
- a first set of blades (14.a) has smaller dimensions compared to the second set of blades (14.b).

The inventive concept common to all claimed protection contexts refers to a means to fabricate the blade plate (14) which comprises a first set of blade plate (14.a) with a reduced dimension relative a second set of blade plate (14.b).

These and other objects of the invention will be immediately appreciated by those versed in the art and by companies with interests in the sector, and will be described in sufficient detail to reproduce in the description below.

### Brief Description of the Figures

In order to better define and clarify the content of this patent application, the present figures are presented:
Figure 1 shows a device mounting scheme presented herein.

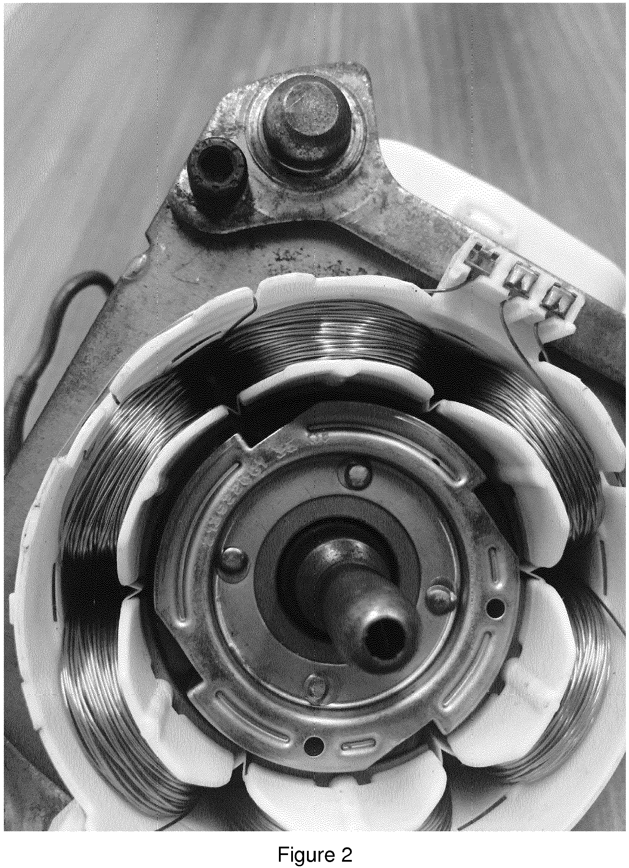

Figure 2 shows a front view of an electrical engine showing an embodiment of the present invention.

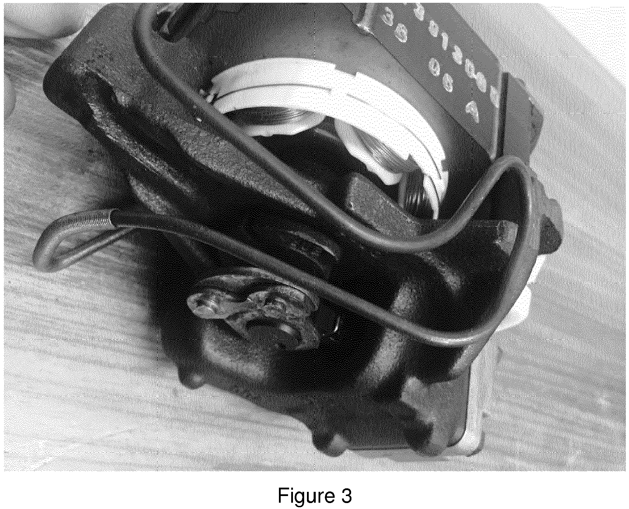

Figure 3 shows a rear view of an electrical engine showing an embodiment of the present invention.

### Detailed Description of the Invention

The descriptions that follow are presented by way of example and not limiting the scope of the invention and will understand more clearly the object of the present application.

The present invention provides a device for electrical engine stator comprising an electrical conductor wire coil made of conventional means, which is dimensioned to gauge the thread according to the application and the current level to which it is subjected, the thread winding in a tube arranged in a reel adapted to wrap such a device. Further, the coil (15) is made to allow the generation of magnetic field to operate, for example, an electric motor, by passing an electric current along said conductor wire wound.

The coil (15) has a known means of electrical insulation, which prevents the electric current that travels through the same is dissipated in the metal parts of the engine structure, resulting in losses in efficiency, in addition to causing electric shocks to users come into contact with the metal parts of the electrical engine structure.

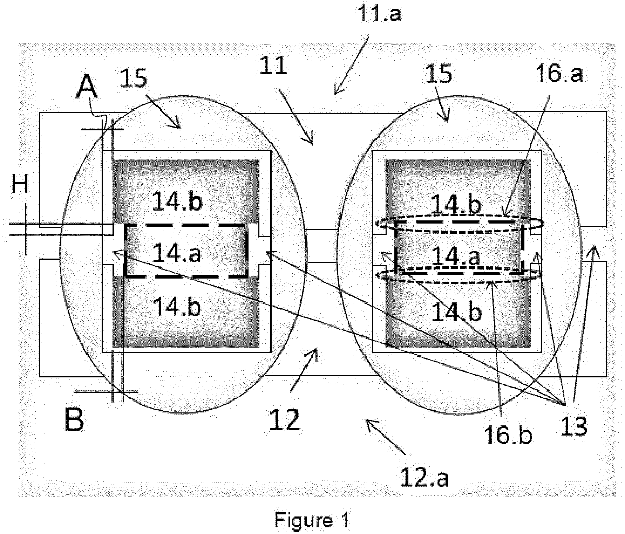

For this, the insulation means comprises a first insulation plate (11) disposed in a first region (11.a), and a second insulation plate (12) disposed in a second region (12 .a) coil assembly (15) as shown in figure 1. Due to the fact of presenting a greater thickness and lower cost of manufacturing, and other advantages, the first insulation plate (11) and the second plate insulation (12) are intermediated by a means of insulation by air (13), which both do not have physical contact.

Thus, the plate strip (14) which forms the coil core (15) is dimensioned to comprise a first set of blades (14.a) and a second set of blades (14.b) where the first set of blades (14.a) has a reduced dimension relative to the second set of blades (14.b). In one exemplification, the sets of blades are made of metallic materials which allow the passage of magnetic flux, where the blades can be presented in various ways, and, for example purposes, presented in a format "E".

Thus, to assemble the core, the second set of blades (14.b) is associated with the end portions (16) of the first set of blades (14.a) so that the first blade assembly (14 .a) is intermediate between two of the second set of blades (14.b), forming the associated blade plate (14), or the coil core (15). Thus, the coil core (15) has a central region with reduced dimensions compared to the dimensions of end regions, which thus reduces the amount of material to produce a coil which is applied, for example, electrical engines, where the plate associated blades (14) is inserted into the center of the electrical conductor wire coil (15).

With the use of thin walls (A) and the compensation of the height (H), and due to the fact that the core comprises a reduction in the central portion with the first set of blades plate (14.a) is possible to achieve the so-called Creepage distance, which is the distance or path, the electric current must travel over a physical barrier as well as an insulating material, to achieve a metal part. In one embodiment, the dimension of the thin walls (A) plus the height (H) greater than 1.6mm. This allows the amount material to produce such an element is reduced, beyond the cost for manufacturing.

In another object, the present invention provides a blade plate manufacturing process for rolls, where the process is defined by the assembly steps of a first set of blades (14.a); mounting a second set of blades (14.b); associating a second set of blades (14.b) at the upper end (16.a) of the first set of blades (14.a); associating a second set of blades (14.b) at the lower end (16.b) of the first set of blades (14.a); inserting the blade plate combination (14) in the center of a coil.

However, the first blade plate (14.a) has smaller dimensions compared to the second blade plate (14.b), which when combined and inserted in the coil (15), form the core of the same, which has a central region with reduced dimensions in relation to the end regions (16). This process enables the cost of board manufacture blades of a coil (15) is reduced and the amount of material used to fabricate the same, ensuring the dimensions provided in the manufacturing of electrical engines standards, for example, Creepage distance.

Those skilled in the art will value the knowledge presented herein, and may play the invention shown in the embodiments, and other embodiments which fall within the scope of the appended claims.

## Claims

1. Device for electrical engine stator **characterized by** the fact that comprises:
a. electrical conductor wire coil (15);
b. first insulation plate (11);
c. second insulation plate (12);
d. first set of blades (14.a); and
e. second set of blades (14.b)
in which,
- the first insulation plate (11) is disposed on a first region (11.a) and the second insulation plate (12) is disposed on a second region (12.a);
- the first insulation plate (11) and the second insulation plate (12) are intermediated by an air insulation mean (13);
- the first set of blades (14.a) presents dimensions lower than the second set of blades (14.b).

2. Device for electrical engine stator, according to claim 1, **characterized by** the fact that the second set of blades (14.b) is associated to the external portions (16) of the first set of blades (14.a), forming the associated blades (14).

3. Device for electrical engine stator, according to any of claims 1 and 2, **characterized by** the fact that the associated blades (14) are inserted on the center of the electrical conductor wire coil (15).

4. Process of manufacturing blade plate for coil, **characterized by** the fact that is defines by the steps of:
a. assembling a first set of blades (14.a);
b. assembling a second set of blades (14.b);
c. association of a second set of blades (14.b) on the superior edge (16.a) of the first set of blade (14.a);
d. association of a second set of blades (14.b) on the inferior edge (16.a) of the first set of blade (14.a); and
e. insertion of the blade plate association (14) on the center of a coil (15);
in which,
- the first set of blades (14.a) presents dimensions lower related to the second set of blades (14.b).
